Europäisches Patentamt

European Patent Office

Office européen des brevets

(19)

(11) Veröffentlichungsnummer: **0 059 448**
**B1**

(12) **EUROPÄISCHE PATENTSCHRIFT**

(45) Veröffentlichungstag der Patentschrift:
**29.05.85**

(51) Int. Cl.⁴: **B 23 Q 3/157,** B 27 C 9/00

(21) Anmeldenummer: **82101487.5**

(22) Anmeldetag: **26.02.82**

(54) Werkzeugwechselvorrichtung für eine Holzbearbeitungsmaschine.

(30) Priorität: 04.03.81 DE 3108127
27.05.81 DE 3121201

(43) Veröffentlichungstag der Anmeldung:
**08.09.82 Patentblatt 82/36**

(45) Bekanntmachung des Hinweises auf die Patenterteilung:
**29.05.85 Patentblatt 85/22**

(84) Benannte Vertragsstaaten:
**AT BE CH FR GB IT LI NL SE**

(56) Entgegenhaltungen:
**CH - A - 128 516**
**DE - B - 1 248 273**
**DE - B - 2 525 212**
**FR - A - 2 011 890**
**US - A - 2 892 475**
**US - A - 3 242 568**

(73) Patentinhaber: **HARBS KOMMANDITGESELLSCHAFT,**
**Rendsburger Landstrasse 329, D-2300 Kiel 1 (DE)**

(72) Erfinder: **Harbs, Alfred, Rendsburger Landstrasse 329,**
**D-2300 Kiel 1 (DE)**

(74) Vertreter: **Dipl.-Ing. H. Hauck Dipl.-Phys. W. Schmitz**
**Dipl.-Ing. E. Graalfs Dipl.-Ing. W. Wehnert Dr.-Ing. W.**
**Döring, Neuer Wall 41, D-2000 Hamburg 36 (DE)**

Beschreibung

Die Erfindung betrifft eine Werkzeugwechselvorrichtung für eine Holzbearbeitungsmaschine, mit einer Anzahl von Bearbeitungseinheiten, die jeweils ein für im Vergleich zu Metallbearbei-tungswerkzeugen verhältnismäßig hohe Arbeits-drehzahlen ausgelegtes Holzbearbeitungswerk-zeug das an einer von Lagern gehaltenen Spindel angeordnet ist, aufweisen und wahlweise fernsteuerbar zwischen einer Vorratsstellung in einem die Bearbeitungseinheiten enthaltenden, schrittweise weiterschaltbaren Träger und einer im Arbeitsbereich der Holzbearbeitungsmaschine liegenden Arbeitsposition versetzbar sind.

Bei Holzbearbeitungsmaschinen bietet der Werkzeugwechsel besondere Schwierigkeiten, weil die Holzbearbeitungswerkzeuge normalerweise schwerer und unhandlicher sind und hö-here Arbeitsdrehzahlen benötigen als Werkzeu-ge zur Metallbearbeitung. Es ist deshalb norma-lerweise nicht möglich, die Holzbearbeitungs-werkzeuge ähnlich wie es seit langem bei Metall-bearbeitungswerkzeugen in Metallbearbei-tungsmaschinen bekannt ist, wahlweise fernge-steuert in eine Konus-Spannvorrichtung einzusetzen (US-A-3 242 568); bei diesem Vorgehen treten unvermeidlich Unwuchten und Zentrierfehler auf, die bei den schnellaufenden und ver-hältnismäßig schweren Holzbearbeitungswerk-zeugen nicht tragbar sind. Es ist deshalb bei Holzbearbeitungsmaschinen weitgehend üblich, die Holzbearbeitungswerkzeuge jeweils von Hand auf eine als Werkzeugträger vorgesehene Spindel zu montieren. Dazu müssen die zur Befestigung dienende Spindelmutter und vielfach noch Zwischenringe abgenommen und wieder aufgebracht werden. Bei dieser Arbeitsweise ist zwar eine sehr genaue Zentrierung möglich, doch erfordert der Werkzeugwechsel einen hohen Aufwand an Zeit und Handarbeit. Das ist unwirtschaftlich und unbequem und stört besonders bei Werkstücken, die nur in verhältnismäßig geringen Stückzahlen bearbeitet und/oder mit verhältnismäßig komplizierten Profilen versehen werden müssen.

Aus der DE-B-1 248 273 ist seit langem eine Werkzeugwechselvorrichtung bekannt, die zur Überwindung der beschriebenen Schwierigkeiten in der eingangs angegebenen Art ausgebildet ist. Bei ihr sind mehrere Bearbeitungseinheiten, die jeweils ein Holzbearbeitungswerkzeug und ein damit bereits verbundenes Lager (eine Spindel) enthalten, in einem als Träger vorgesehenen Revolver bevorratet, der innerhalb des Maschinengehäuses angeordnet ist. Durch Drehen des Revolvers kann die jeweils benötigte Bearbeitungseinheit in eine Bereitschaftsstellung und von dort durch axiale Verstellung in die Arbeitsposition gebracht werden. Da bei dieser Bauweise der Revolver notwendigerweise durch den Arbeitsbereich verläuft und sehr nahe an der Arbeitsposition angeordnet ist, sind die auf dem Revolver bevorrateten Bearbeitungseinheiten schwer zugänglich; auch die Anordnung innerhalb des Maschinengehäuses erschwert den Zugang zu dem Träger und den darin befindlichen Bearbeitungseinheiten. Insbesondere aber ist nachteilig, daß der Träger nur bei Maschinenstillstand beschickt werden kann. Wartung und Austausch der in dem Träger bevorrateten Bearbeitungseinheiten sind stark erschwert.

Eine ebenfalls seit langem bekannte Möglichkeit zur Überwindung der eingangs beschriebenen Schwierigkeiten besteht nach dem internen Stand der Technik der Anmelderin darin, daß mehrere Bearbeitungseinheiten einer Holzbear-beitungsmaschine entlang einer Bearbeitungs-bahn aufgereiht sind, auf der das Werkstück, z. B. ein Fensterrahmen, durch die Maschine bewegt wird. Ersichtlich kann man bei dieser Bauweise eine recht große Anzahl von Holzbearbei-tungswerkzeugen wahlweise zum Einsatz brin-gen. Die Bearbeitungsbahn muß aber dann entsprechend lang ausgeführt sein. Die ganze Maschine erhält dadurch eine verhältnismäßig große Länge, und die Durchlaufzeiten der Werkstücke werden entsprechend groß; das stört besonders bei Einzelstücken und kleinen Serien, weil vor der Umstellung auf ein neues Werkzeug das letzte Arbeitsstück die lange Bearbeitungsbahn erst verlassen haben muß. Austausch- und Wartungsarbeiten an den Holzbearbeitungswerkzeugen sind nur in Arbeitspausen der Holzbearbeitungsmaschine möglich.

Die Erfindung geht von der Aufgabe aus, eine Werkzeugwechselvorrichtung für Holzbearbeitungsmaschinen zu schaffen, die einen Austausch und eine Wartung der im Magazin befind-lichen Bearbeitungseinheiten ohne weiteres er-möglicht, und zwar insbesondere auch während des Betriebes der Holzbearbeitungsmaschine.

Nach der Erfindung wird diese Aufgabe gelöst mit einer Werkzeugwechselvorrichtung der eingangs angegebenen Art, die dadurch gekennzeichnet ist, daß der Träger als Magazin ausgebildet ist, welches außerhalb des Arbeitsbereichs der Holzbearbeitungsmaschine in einem leicht zugänglichen Vorratsbereich angeordnet ist, und daß eine wahlweise betätigbare Bearbeitungseinheit-Transfereinrichtung vorgesehen ist, mit der eine ausgewählte Bearbeitungseinheit aus dem Magazin entnehmbar und in die Arbeitsposition oder eine dieser nahe benachbarte Bereitschaftsposition transportierbar ist.

Bei der erfindungsgemäßen Werkzeugwechselvorrichtung können Art, Kapazität und Baugröße des Magazins unabhängig von der räumlichen Gegebenheiten im Arbeitsbereich gestaltet werden. Das Magazin kann leicht zugänglich mit räumlichem Abstand vom Arbeitsbereich an-geordnet werden. Wegen der Zwischenschal-tung der Bearbeitungseinheit-Transfereinrich-tung ist es ohne weiteres möglich, die in dem Magazin befindlichen Bearbeitungseinheiten während des normalen Betriebs der Maschine zu warten und/oder auszutauschen.

Die erfindungsgemäße Werkzeugwechselvorrichtung ist vorzugsweise so ausgelegt, daß die Transfereinrichtung für eine im wesentlichen radial zur Achse des Lagers verlaufende Übergabe von Bearbeitungseinheiten in die und aus der Arbeits- oder Bereitschaftsposition eingerichtet ist. Dadurch kann der gesamte Wechselvorgang im wesentlichen in einer Ebene ablaufen, und der Fortfall von zusätzlichen axialen Transferbewegungen führt zu einer entsprechenden Beschleunigung des Wechselvorgangs.

Damit für den Werkzeugwechsel eine hohe Genauigkeit sichergestellt ist, haben vorzugsweise die Transfereinrichtung und die Bearbeitungseinheiten zusammenwirkende Orientierungsmittel, die eine genaue Positionierung der Bearbeitungseinheiten sicherstellen.

Weitere Ausgestaltungen der Erfindung sind in Unteransprüchen angegeben.

Die Erfindung wird im folgenden anhand von Ausführungsbeispielen in Verbindung mit den Zeichnungen näher beschrieben.

Fig. 1 ist eine schematische Seitenansicht einer erfindungsgemäßen Werkzeugwechselvorrichtung,

Fig. 2 ist eine gegenüber Fig. 1 um 90° gedrehte schematische Seitenansicht,

Fig. 3 ist eine schematische Draufsicht auf die in Fig. 1 dargestellte Vorrichtung,

Fig. 4 eine Seitenansicht einer mit Orientierungsmitteln versehenen Bearbeitungseinheit,

Fig. 5 eine gegenüber Fig. 4 um 90° gedrehte Seitenansicht und

Fig. 6 eine Draufsicht auf die Bearbeitungseinheit gemäß Fig. 4 und 5.

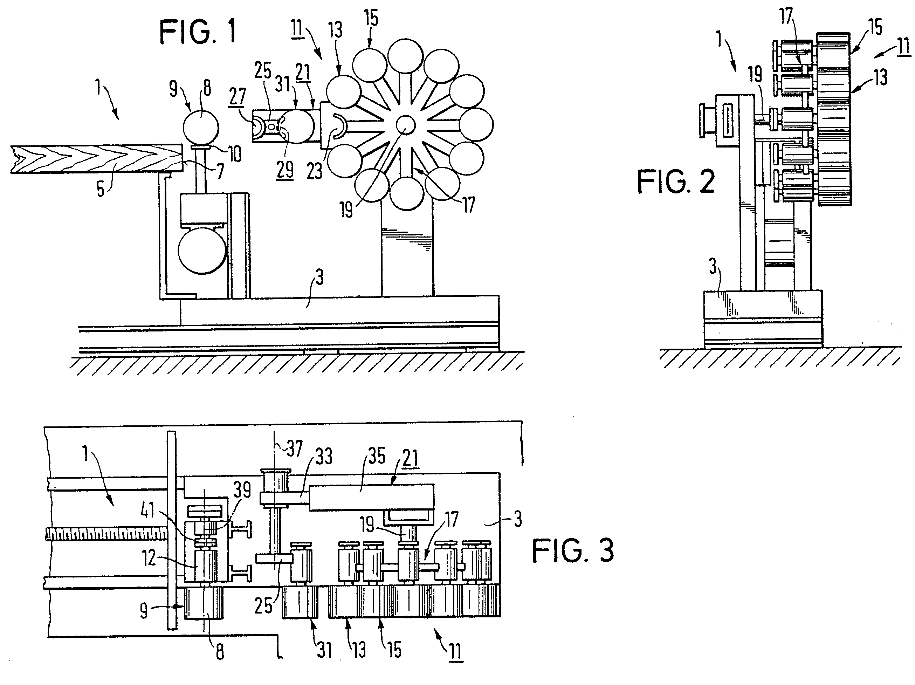

Fig. 1 bis 3 zeigen schematisch eine Holzbearbeitungsmaschine 1 mit einem Rahmen 3. Darin ist ein balkenförmiges Holz-Werkstück 5, das in Fig. 1 in Seitenansicht dargestellt ist, in einer Vorschubrichtung senkrecht zur Papierebene bewegbar. Dabei geht der in Fig. 1 dargestellte rechte Rand 7 des Werkstücks 5 durch einen Arbeitsbereich, in welchem das Werkzeug 8 einer Bearbeitungseinheit 9 am Rand 7 des Werkstücks 5 zum Angriff gebracht werden kann. Die Bearbeitungseinheit 9 ist auf einem Träger 10 auf- und abbewegbar. In Fig. 1 ist die Bearbeitungseinheit 9 in einer Bereitschaftsposition dargestellt, die den Arbeitspositionen beim Eingriff mit dem Werkstück 5 nahe benachbart ist.

In einem außerhalb des Arbeitsbereichs der Maschine liegenden und leicht zugänglichen Vorratsbereich ist ein Magazin 11 angeordnet, in welchem eine Anzahl von Bearbeitungseinheiten 13, 15, usw. in Vorratsstellungen bevorratet sind. Jede Bearbeitungseinheit, z. B. 9, enthält jeweils mindestens ein Werkzeug, z. B. 8, das für im Vergleich zu Metallbearbeitungswerkzeugen verhältnismäßig hohe Arbeitsdrehzahlen ausgelegt ist, und ein Lager 12 dafür. Bei der dargestellten Vorrichtung ist das Magazin als Drehmagazin ausgelegt. Es enthält einen sternartigen Träger 17, der um eine horizontale Magazinachse 19 drehend weiterschaltbar ist. Auf dem Träger 17 sind die Vorratsplätze für die bevorrateten einzelnen Bearbeitungseinheiten 13, 15 usw. vorgesehen. Zur Überbrückung des räumlichen Abstandes zwischen dem Arbeitsbereich der Maschine 1 und dem durch das Magazin gebildeten Vorratsbereich ist eine wahlweise fernsteuerbar betätigbare Transfereinrichtung 21 vorgesehen, mit der eine jeweils ausgewählte Bearbeitungseinheit aus dem Magazin in die Arbeitsposition oder eine dieser nahe benachbarte Bereitschaftsposition (in der sich in Fig. 1 gerade die Bearbeitungseinheit 9 befindet) transportiert werden kann. Da bei der dargestellten Ausführungsform des Magazin beweglich ist, kommt man mit einer sehr einfachen Transfereinrichtung aus, die im wesentlichen nur eine Linearbewegung zwischen der (in Fig. 1 von der Bearbeitungseinheit 9 eingenommenen) Bereitschaftsstellung und einer am Magazin 11 definierten Übergabeposition 23 auszuführen braucht. In dieser Übergabeposition ist die darin befindliche Bearbeitungseinheit von der Transfereinrichtung 21 erfaßbar. Diese Kombination von bewegbarem Magazin und einfacher Transfereinrichtung ist baulich besonders einfach und betriebssicher.

Bei der dargestellten Ausführungsform ergibt sich ein weiterer Vorteil dadurch, daß die Transfereinrichtung 21 eine Greifeinrichtung 25 mit zwei nahe benachbarten Greifeinheiten 27 und 29 aufweist. Wie aus Fig. 1 ohne weiteres ersichtlich ist, kann dadurch mit der zweiten Greifeinheit 29 eine neu in die Arbeitsposition zu bringende Bearbeitungseinheit 31 nahe an der Arbeitsposition zu raschem Austausch bereitgehalten werden, während mit der ersten Greifeinheit 27 eine auszutauschende Bearbeitungseinheit 9 aus der Arbeitsposition (genauer der Bereitschaftsposition) entnommen wird.

Die Greifeinrichtung 25 ist auf einer Stange 33 angebracht, die in einer Führung 35 aus- und einfahrbar ist, so daß dadurch die Greifeinrichtung zwischen dem Magazin und dem Arbeitsbereich linear hin- und herbewegt werden kann. Diese sehr einfache Kinematik ermöglicht eine entsprechend einfache und robuste Bauweise. Bei der dargestellten Ausführungsform ist die Greifeinrichtung 25 um eine zu ihrer Bewegungsrichtung senkrechte Drehachse 37 drehbar, und die beiden Greifeinheiten 27 und 29 sind an diametral zu der Drehachse 37 liegenden Stellen angeordnet. Das bietet den Vorteil, daß durch Drehen der Greifeinrichtung um die Drehachse 37 die neue Bearbeitungseinheit 31, die in der zweiten Greifeinheit 29 schon nahe an der Arbeitsposition bereitgehalten wird, rasch und ohne eine weitere Linearbewegung der Transfereinrichtung gegen die auszutauschende Bearbeitungseinheit 9 ausgetauscht werden kann. Dadurch kann der Werkzeugwechsel besonders rasch vor sich gehen, und zwar radial zu der Achse 39 des Werkzeug-Lagers 41.

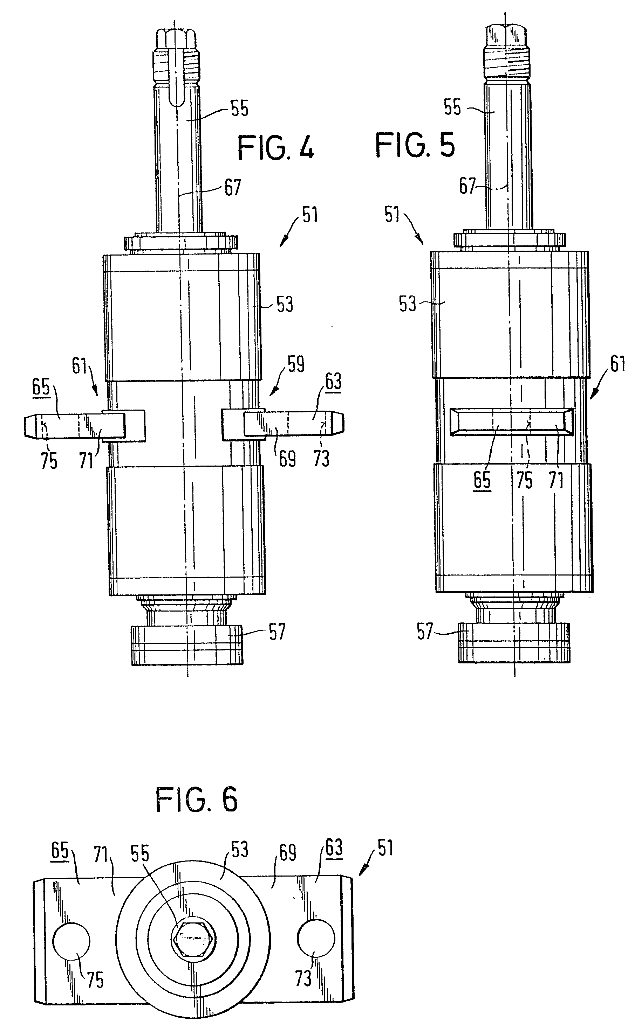

Bei der dargestellten Ausführungsform liegt die Drehachse 37 der Greifeinrichtung 25 senkrecht zur linearen Bewegungsrichtung der Transfereinrichtung (Bewegungsrichtung der Stange 33). Das ist baulich besonders einfach und hat den Vorteil, daß zum Ein- und Auskuppeln der Bearbeitungseinheiten an ihren Plätzen im Arbeitsbereich, auf der Greifeinrichtung 25 und im Magazin 11 nur geringe oder gar keine Bewegungen quer zur Transportrichtung erforderlich sind. Dazu ist in Fig. 3 angedeutet, daß in dem Arbeitsbereich der Werkzeugträger 10 mit einer wahlweise zu betätigenden Kupplung 41 zum Ankuppeln einer Bearbeitungseinheit 9 versehen ist. Der Träger 10 stellt ein treibendes Teil für die angekuppelte Bearbeitungseinheit 9 dar. Auch diese Ausführung ist baulich einfach und robust. Bei der dargestellten Ausführungsform ist angenommen, daß die Kupplung 41 als fernsteuerbare Magnetkupplung ausgebildet ist. Dadurch wird ein besonders rasches Ein- und Auskuppeln ermöglicht.

Bei der beschriebenen Ausführungsform übergibt die Transfereinrichtung 21 die Bearbeitungseinheiten, z. B. die Einheit 9, in die und aus der Arbeits- oder Bereitschaftsposition in einer Richtung, die radial zu der Achse 39 des Lagers 12 der betreffenden Bearbeitungseinheit 9 verläuft. Im Gegensatz zu bekannten Wechselvorrichtungen, bei denen ein Teil der Transferbewegung in der Axialrichtung des betreffenden Werkzeug-Lagers verläuft, ermöglicht dies eine raschere Durchführung des Werkzeugwechsels.

Die in den Fig. 4 bis 6 dargestellte Bearbeitungseinheit 51 hat ein zylindrisches Gehäuse 53, in welchem ein Lager für eine Spindel 55 zur Aufnahme eines Bearbeitungswerkzeugs vorgesehen ist. Die Spindel ragt axial aus dem einen, in den Figuren oberen Ende der Bearbeitungseinheit vor. An dem anderen axialen Ende der Einheit 51 ist ein Kupplungsteil 57 vorgesehen, über das die Spindel 55 antreibbar ist. Die Tranfereinrichtung und die Bearbeitungseinheiten haben zusammenwirkende Orientierungsmittel, die eine genaue Positionierung der Bearbeitungseinheiten sicherstellen. Bei der dargestellten Ausführungsform sind an der Bearbeitungseinheit 51 Orientierungsmittel in Form zweier profilierter Bereiche 59, 61 vorgesehen; diese wirken mit (nicht dargestellten) Gegenprofilen der Transfereinrichtung zusammen. Durch das Ineinandergreifen der Orientierungsmittel kann die richtige Position der Bearbeitungseinheit in einfacher Weise sichergestellt werden. Zweckmäßigerweise hat auch die in den Fig. 4 bis 6 nicht dargestellte Bearbeitungsmaschine passende Gegenprofile, so daß mit ein und denselben Orientierungsmitteln auch die richtige Position der Bearbeitungseinheit in der Bearbeitungsmaschine sichergestellt wird. Bei der dargestellten Ausführungsform sind die profilierten Bereiche durch Vorsprünge 63 bzw. 65 gebildet, die sich senkrecht zur Drehachse 67 der betreffenden Bearbeitungseinheit 51 erstrecken. Dadurch kann das Ein- und Ausrücken der Orientierungsmittel in einer zur Drehachse 67 senkrechten Richtung erfolgen, so daß keine Hubbewegungen in Richtung der Drehachse 67 erforderlich sind. Bei der dargestellten Ausführungsform sind zwei diametral gegenüberliegende Vorsprünge 63, 65 vorgesehen; das ermöglicht eine besonders einfache und sicher wirkende Konstruktion der in der Transfereinrichtung vorzusehenden Greifeinrichtungen. Die dagestellte Ausführungsform ist weiter dadurch besonders einfach, daß die Vorsprünge von flachen Laschen 69 bzw. 71 gebildet sind. In jeder Lasche ist wenigstens ein Loch 73 bzw. 75 vorgesehen, das zum Zusammenwirken mit Teilen der Transfereinrichtung (nicht dargestellt) bemessen ist. Das schafft die einfache Möglichkeit, einen sicheren Eingriff durch einen durch das Loch geschobenen Paßbolzen herzustellen. Die Achsen der Löcher verlaufen parallel zu der Drehachse 67. Das ergibt eine einfache Kinematik beim Wechselvorgang.

**Patentansprüche**

1. Werkzeugwechselvorrichtung für eine Holzbearbeitungsmaschine, mit einer Anzahl von Bearbeitungseinheiten, die jeweils ein für im Vergleich zu Metallbearbeitungswerkzeugen verhältnismäßig hohe Arbeitsdrehzahlen ausgelegtes Holzbearbeitungswerkzeug, das an einer von Lagern gehaltenen Spindel angeordnet ist, aufweisen und wahlweise fernsteuerbar zwischen einer Vorratsstellung in einem die Bearbeitungseinheiten enthaltenden, schrittweise weiterschaltbaren Träger und einer im Arbeitsbereich der Holzbearbeitungsmaschine liegenden Arbeitsposition versetzbar sind, dadurch gekennzeichnet, daß der Träger als Magazin (11) ausgebildet ist, welches außerhalb des Arbeitsbereichs (bei 9) der Holzbearbeitungsmaschine (1) in einem leicht zugänglichen Vorratsbereich angeordnet ist, und daß eine wahlweise betätigbare Bearbeitseinheit-Transfereinrichtung (21) vorgesehen ist, mit der eine ausgewählte Bearbeitungseinheit aus dem Magazin (11) entnehmbar und in die Arbeitsposition oder einer dieser nahe benachbarte Bereitschaftsposition transportierbar ist.

2. Vorrichtung nach Anspruch 1, dadurch gekennzeichnet, daß die Transfereinrichtung (21) eine Greifeinrichtung (25) mit zwei nahe benachbarten Greifeinheiten (27, 29) aufweist, und daß mit der zweiten Greifeinheit (29) eine neu in die Arbeitsposition zu bringende Bearbeitungseinheit (31) nahe an der Arbeitsposition zu raschem Austausch bereitgehalten werden kann, während mit der ersten Greifeinheit (27) die auszutauschende Bearbeitungseinheit (9) aus der Arbeits- oder Bereitschaftsposition entnommen wird.

3. Vorrichtung nach Anspruch 1 oder 2, dadurch gekennzeichnet, daß die Transfereinrichtung (21) eine zwischen dem Magazin (11) und dem Arbeitsbereich (bei 9) linear bewegbare Greifeinrichtung (25) aufweist.

4. Vorrichtung nach den Ansprüchen 2 und 3, dadurch gekennzeichnet, daß die Greifeinrichtung (25) um eine zu ihrer Bewegungsrichtung senkrechte Drehachse (37) drehbar ist, und daß die beiden Greifeinheiten (27, 29) an diametral zu der Drehachse (37) liegenden Stellen angeordnet sind.

5. Vorrichtung nach einem der vorhergehenden Ansprüche, dadurch gekennzeichnet, daß das Magazin (11) einen bewegbaren Träger (17) aufweist, auf welchem Vorratsplätze für die einzelnen Bearbeitungseinheiten (13, 15) vorgesehen und durch Bewegen des Trägers wahlweise in eine Übergabeposition (23) bringbar sind, in der die betreffende Bearbeitungseinheit von der Transfereinrichtung (21) erfaßbar ist.

6. Vorrichtung nach einem der vorhergehenden Ansprüche, dadurch gekennzeichnet, daß in dem Arbeitsbereich ein Werkzeug-Träger (10) zur Aufnahme einer Bearbeitungseinheit (9) vorgesehen ist, und daß der Werkzeug-Träger als treibendes Teil für die Bearbeitungseinheit ausgebildet ist und mit der Bearbeitungseinheit über eine wahlweise zu betätigende Kupplung (41) kuppelbar ist.

7. Vorrichtung nach Anspruch 6, dadurch gekennzeichnet, daß die Kupplung eine fernsteuerbare Magnetkupplung ist.

8. Vorrichtung nach einem der vorhergehenden Ansprüche, dadurch gekennzeichnet, daß die Transfereinrichtung (21) für die Übergabe von Bearbeitungseinheiten (9) in einer im wesentlichen radial zur Achse (39) ihres Lagers (12) verlaufenden Richtung in die und aus der Arbeits- oder Bereitschaftsposition eingerichtet ist.

9. Vorrichtung nach einem der vorhergehenden Ansprüche, dadurch gekennzeichnet, daß die Transfereinrichtung und die Bearbeitungseinheiten (51) zusammenwirkende Orientierungsmittel aufweisen, die eine genaue Positionierung der Bearbeitungseinheiten sicherstellen.

10. Vorrichtung nach Anspruch 9, dadurch gekennzeichnet, daß die Orientierungsmittel an den Bearbeitungseinheiten profilierte Bereiche (59, 61) aufweisen, die mit Gegenprofilen der Transfereinrichtung zusammenwirken.

11. Vorrichtung nach Anspruch 10, dadurch gekennzeichnet, daß auch die Bearbeitungsmaschine passende Gegenprofile aufweist.

12. Vorrichtung nach Anspruch 10 oder 11, dadurch gekennzeichnet, daß der profilierte Bereich Vorsprünge (63, 65) aufweist, die sich senkrecht zur Drehachse (67) der betreffenden Bearbeitungseinheit erstrecken.

13. Vorrichtung nach Anspruch 12, dadurch gekennzeichnet, daß zwei diametral gegenüberliegende Vorsprünge (63, 65) vorgesehen sind.

14. Vorrichtung nach Anspruch 12 oder 13, dadurch gekennzeichnet, daß die Vorsprünge von Laschen (69, 71) gebildet sind.

15. Vorrichtung nach Anspruch 14, dadurch gekennzeichnet, daß in der Lasche (69, 71) wenigstens ein Loch (73, 75) vorgesehen ist, das zum Zusammenwirken mit Teilen der Transfereinrichtung bemessen ist.

16. Vorrichtung nach Anspruch 15, dadurch gekennzeichnet, daß die Achse des Loches parallel zu der Drehachse (67) verläuft.

# Claims

1. A tool changing device for a wood processing machine, comprising a plurality of processing units each being provided with a wood processing tool designed for relatively high working speeds in comparison with metal working tools and arranged in a spindle retained by bearings, said units being selectively displaceable under remote control between a supply position in a carrier containing the processing units and adapted to be indexed step by step, and a working position located in the working sphere of the wood processing machine, characterized in that the carrier is designed as a magazine (11) which is arrenged in an easily accessible storage area outside the working sphere (at 9) of the wood processing machine (1), and in that a transfer device (21) is provided which is selectively operable and with th aid of which a selected processing unit is capable of being taken out of the magazine (11) and transported into the working position or into a position of readiness closely adjacent thereto.

2. A device according to claim 1, characterized in that the transfer device (21) comprises a gripping means (25) with two closely adjacent gripping units (27, 29) and in that a processing unit (31) to be newly brought into the working position may be kept in readiness for quick exchange close to the working position with the aid of the second gripping unit (29), while the processing unit (9) for changing is taken out of the working position or the position of readiness with the aid of the first gripping unit (27).

3. A device according to claim 1 or 2, characterized in that the transfer device (21) comprises a gripping means (25) linearly movable between the magazine (11) and the working area (at 9).

4. A device according to the claims 2 and 3, characterized in that the gripping means (25) is rotatable about an axis of rotation (37) disposed normal to its direction of movement, and in that the two gripping units (27, 29) are arranged at locations disposed diametrically with respect to the axis of rotation (37).

5. A device according to any one of the preceding claims, characterized in that the magazine (11) comprises a movable carrier (17) with storage sites for the individual processing units (13, 15) provided thereon which are adapted to be selectively brought into a position of transfer (23) through movement of the carrier, wherein the respective processing units is adapted to be engaged by the transfer unit (21).

6. A device according to any one of the preceding claims, characterized in that a tool carrier (10) is provided in the working area for the reception of a processing unit (9), and in that the tool carrier is designed as a driving membe for the processing unit and is adapted to be coupled with the processing unit via a selectively operable clutch (41).

7. A device according to claim 6, characterized in that the clutch is a remotely controlled magnetic clutch.

8. A device according to any one of the preceding claims, characterized in that the transfer device (21) is arranged for transfer of processing units (9) into and out of the working position or position of readiness in a direction extending essentially radially with respect to the axis (39) of the bearing (12) thereof.

9. A device according to any one of the preceding claims, characterized in that the transfer device and the processing units (51) comprise cooperating means of orientation which ensure an exact positioning of the processing units.

10. A device according to claim 9, characterized in that the means of orientation provided on the processing units have profiled areas (59, 61) which cooperate with counter-profiles of the transfer means.

11. A device according to claim 10, characterized in that the processing machine, too, comprises suitable counterprofiles.

12. A device according to claim 10 or 11, characterized in that the profiled area comprises projections (61, 65) extending normal with respect to the axis of rotation (67) of the respective processing unit.

13. A device according to claim 12, characterized in that two projektions (63, 65) are provided in diametrically opposite arrangement.

14. A device according to claim 12 or 13, characterized in that the projections are formed by tongues (69, 71).

15. A device according to claim 14, characterized in that at least one aperture (73, 75) is provided in the tongue (69, 71) which is dimensioned to cooperate with parts of the transfer device.

16. A device according to claim 15, characterized in that the axis of the aperture extends in parallel with respect to the axis of rotation (67).

## Revendications

1. Un dispositif à changer des outils pour une machine à usine du bois, ce dispositif comprenant un nombre des unités à usiner, chaque de celles-ci comportant un outil à usiner le bois désigné pour des vitesses d'opération relativement hautes en comparaison avec des outils pour usiner du metal et disposé près d'une tige retenue par des supports, et chaque de ces unités étant capable d'être facultativement contrôlé par télécommande entre une position d'entrepôt dans un poutre capable d'être indexé pas à pas et contenant ces unités à usiner, et une position à usiner située dans la sphère d'usinage de la machine (1) à usiner du bois caractérisé en ce que le poutre est formé comme magasin (11) disposé en dehors de la sphère d'usinage (près de 9) de la machine (1) à usiner du bois dans une sphère d'entrepôt facilement accessible, et en ce qu'il est prévue une unité usinage/transfert (21) capable d'être facultativement opérée par laquelle une unité à usiner sélectionnée peut être prise dans le magasin (11) et transportée à la position à usiner ou une position d'attente proche voisine de celle.

2. Un dispositif selon la revendication 1, caractérisé en ce que le dispositif à transfert (21) comprend un dispositif à saisir (25) comprenant deux unités à saisir (27, 29) proche voisine l'une à l'outre, et en ce qu'une unité à usiner (31) qui est à amener à nouveau dans la position d'usinage peut être tenue en attente pour un changement rapide près de la position d'usinage par la seconde unité à saisir (29), pendant que l'unité à usinage (9) à remplacer est prise hors de la position à usiner ou d'attente par la première unité à saisir (27).

3. Un dispositif selon la revendications 1 ou 2, caractérisé en ce que le dispositif à transfert (21) comprend une dispositif à saisir (25) capable d'être bouger linéalement entre le magasin et la sphère d'usinage (près du 9).

4. Un dispositif selon la revendications 2 et 3, caractérisé en ce que le dispositif à saisir (25) est capable d'être tourner autour d'une axe de rotation (37) à plomb sur son sens de mouvement, et en ce que toutes les deux unités à saisir (27, 29) sont disposées à des endroits situés diamétralement à l'axe de rotation (37).

5. Un dispositif selon une des revendications précédentes, caractérisé en ce que le magasin (11) comprend un poutre (17) sur lequel sont prévus des endroits d'entrepôt pour les unités d'usinage (13, 15) individuelles et peuvent être facultativement amenés dans une position de transfert (23) par le mouvement du poutre, où l'unité d'usinage correspondante peut être saisie par le dispositif de transfert (21).

6. Un dispositif selon une des revendications précédentes, caractérisé en ce que dans la sphère d'usinage est prévu un porte-outil (10) pour recevoir une unité à usiner (9), et en ce que le porte-outil est formé comme élément actionnant et est capable d'être accouplé avec l'unité à usiner par un accouplement (41) à opération facultative.

7. Un dispositif selon revendication 6, caractérisé en ce que l'accouplement est un accouplement à magnéto à contrôle télécommande.

8. Un dispositif selon une des revendications précédentes, caractérisé en ce que le dispositif de transfert (21) est arrangé pour le transfert des unité à usiner (9) dans la position à usiner ou la position d'attente et hors de ces positions en une direction sensiblement radiale à l'axe (39) de son support (12).

9. Un dispositif selon une des revendications précédentes, caractérisé en ce que le dispositif de transfert et les unités à usiner (51) comprennent des moyens d'orientation coopératifs assurant un placement exact des unités à usiner.

10. Un dispositif selon revendication 9, caractérisé en ce les moyens d'orientation aux unités à usiner comprennent des domaines profilés (59, 61) coopérant avec des contre-profil du dispositif de transfert.

11. Un dispositif selon revendication 10, caractérisé en ce que la machine à usiner aussi a des contre-profils appropriés.

12. Un dispositif selon revendications 10 ou 11, caractérisé en ce que le domaine profilé comporte des projectures (63, 65) s'étendant à plomb sur l'axe de rotation (67) de l'unité à usiner correspondante.

13. Un dispositif selon revendication 12, caractérisé en ce qu'il sont prévues deux projectures (63, 65) diamétralement opposées.

14. Un dispositif selon revendication 12 ou 13, caractérisé en ce que les projectures sont formées par des languettes (69, 71).

15. Un dispositif selon revendication 14, caractérisé en ce qu'au moins un trou (73, 75) est prévu dans la languette (69, 71) qui est dimensionné pour coopérer avec des parts du dispositif de transfert.

16. Un dispositif selon revendication 15, caractérisé en ce que l'axe du trou s'étent parallèlement à l'axe de rotation (67).

FIG. 2

FIG. 3

FIG. 1

0 059 448

FIG. 4  FIG. 5

FIG. 6

11